Europäisches Patentamt

European Patent Office

Office européen des brevets

(19)

(11) Veröffentlichungsnummer: **0 132 492**
**A1**

## (12) EUROPÄISCHE PATENTANMELDUNG

(21) Anmeldenummer: 84101707.2

(22) Anmeldetag: 18.02.84

(51) Int. Cl.⁴: **F 16 H 25/22**

(30) Priorität: 29.06.83 DE 3323345

(43) Veröffentlichungstag der Anmeldung:
13.02.85 Patentblatt 85/7

(84) Benannte Vertragsstaaten:
AT BE CH FR GB IT LI LU NL SE

(71) Anmelder: Neff Gewindespindeln GmbH
Alfred-Ritter-Strasse 47
D-7035 Waldenbuch(DE)

(72) Erfinder: Neff, Karl
Schillerstrasse 10
D-7035 Waldenbuch(DE)

(74) Vertreter: Rüger, Rudolf, Dr.-Ing. et al,
Webergasse 3 Postfach 348
D-7300 Esslingen/Neckar(DE)

(54) Kugelumlauf-Schraubgetriebe.

(57) Ein Kugelumlauf-Schraubetriebe, zwischen dessen Spindel (1) und Mutter wenigstens ein durch entsprechende, im Querschnitt im wesentlichen teilkreisförmige Schraubennuten (2) der Spindel (1) und der Mutter begrenzter, schraubenförmig verlaufender Kugelumlaufkanal (6) ausgebildet ist, in dem die Kugeln (3) angeordnet sind, weist einen in der Mutter vorgesehenen, die Kugeln von einem Endabschnitt eines Schraubenganges des Kugelumlauf kanales zu einem anderen Endabschnitt dieses Schraubenganges leitenden Rückleitungskanal auf.

Zur Vereinfachung der Herstellungsmöglichkeiten und zur Erzielung einer weitgehenden Freiheit in der Materialauswahl und der Gestaltung der Mutter ist die Anordnung derart getroffen, daß die Mutter wenigstens einen entsprechend einem Schraubengang (2) des Kugelumlaufkanales gekrümmten, im Querschnitt rinnenförmigen Profilring (4) aufweist, durch den eine Schraubennut (5) der Mutter gebildet ist und der mit einem quer verlaufenden, den Rückleitungskanal bildenden Abschnitt (7) versehen ist.

./...

EP 0 132 492 A1

*Fig . 1*

- 1 -

## Kugelumlauf-Schraubgetriebe

Die Erfindung betrifft ein Kugelumlauf-Schraubgetriebe, zwischen dessen Spindel und Mutter wenigstens ein durch entsprechende, im Querschnitt im wesentlichen teilkreisförmige Schraubennuten der Spindel und der Mutter begrenzter, schraubenförmig verlaufender Kugelumlaufkanal ausgebildet ist, in dem die Kugeln angeordnet sind, wobei die Mutter einen die Kugeln von einem Endabschnitt eines Schraubenganges des Kugelumlaufkanales zu dem anderen Endabschnitt dieses Schraubenganges leitenden Rückleitungskanal aufweist.

Bei bekannten Kugelumlauf-Schraubgetrieben ist die Schraubennut der Mutter unmittelbar in das Material der im wesentlichen hohlzylindrischen Mutter eingearbeitet. Je nach der zu erzielenden Tragzahl sind in der Mutter ein oder mehrere Rückleitungskanäle vorgesehen, die aus Herstellungsgründen durchweg an einem eigenen Rückleitungskörper ausgebildet sind, der in eine entsprechende Ausnehmung oder Bohrung an einer Stelle der Mutter eingefügt ist. Die einen Teil des Kugelumlaufkanales bildende Schraubennut muß mit Rücksicht auf die Spielfreiheit und die Lebensdauer des Kugelumlauf-Schraubgetriebes eine fein bearbeitete Oberfläche aufweisen, was teure Innenschleifarbeiten erforderlich macht. Auch ist die Montage des Getriebes mit dem den Rückleitungskanal enthaltenden Rückleitungselement nicht ganz einfach, wobei es in der Regel

- 2 -

nicht möglich ist, Vorkehrungen dagegen zu treffen,
daß bei unsachgemäßem Abschrauben der Mutter von der
Spindel Kugeln herausfallen und verlorengehen. Schließlich bedingt die Ausbildung der Schraubennut in dem
Material der Mutter, daß für diese nur bestimmte Materialien in Frage kommen, die den Härte- und Festigkeitsanforderungen genügen.

Aufgabe der Erfindung ist es deshalb, ein Kugelumlauf-
Schraubgetriebe zu schaffen, das sich bei hoher Qualität durch eine wesentlich vereinfachte Herstellungsmöglichkeit auszeichnet und in der Materialauswahl und
der Gestaltung der Mutter weitgehende Freiheit läßt.

Zur Lösung dieser Aufgabe ist das eingangs genannte
Kugelumlauf-Schraubgetriebe erfindungsgemäß dadurch gekennzeichnet, daß die Mutter wenigstens einen entsprechend einem Schraubengang des Kugelumlaufkanales gekrümmten, im Querschnitt rinnenförmigen Profilring
aufweist, durch den eine Schraubennut der Mutter gebildet ist und der mit einem quer verlaufenden Rückleitungskanal versehen ist.

In einer bevorzugten Ausführungsform kann der Rückleitungskanal gleich durch einen quer verlaufenden kurzen
Abschnitt des Profilringes gebildet sein.

Der Profilring selbst kann als geschlossener Ring ausgebildet sein, doch kann aus Herstellungsgründen die
Anordnung auch derart getroffen sein, daß der Profilring aus wenigstens zwei endseitig aneinander anschließend angeordneten, entsprechend gebogenen Profilringteilen besteht.

- 3 -

Dabei kann der Profilring aus wenigstens einem entsprechend gestanzten Blechteil geformt sein. In einer anderen Ausführungsform kann der Profilring aus wenigstens einem, entsprechend abgelängten und gebogenen Profilblechteil bestehen, dessen Enden gegebenenfalls miteinander verbunden sind.

Mit dem Profilring bzw. an mehreren Profilringen kann unmittelbar das mit dem Kugelumlauf-Schraubgetriebe gekuppelte, Kraft- oder Drehmoment aufnehmende Element verbunden sein. Besonders zweckmäßig ist es aber, wenn wenigstens ein Profilring in einen eine entsprechende Durchgangsbohrung aufweisenden Mutterkörper eingesetzt und in diesem unverdrehbar gehaltert ist. Da die Kugellaufbahn in dem Profilring selbst ausgebildet ist und an den Mutterkörper hinsichtlich der Materialauswahl und der Herstellung keine besonderen Anforderungen gestellt werden, kann der Profilring in den Mutterkörper eingegossen oder eingespritzt sein, wie es auch möglich ist, daß der Mutterkörper aus einem Kunststoffmaterial besteht. Bei einer weiteren Ausführungsform kann der Profilring zumindest in den dem Rückleitungskanal benachbarten Bereichen eine auf einer koaxialen Kreiszylinderfläche liegende Außenumfangsfläche aufweisen und in eine zylindrische Bohrung des Mutterkörpers eingesetzt sein, die gegebenenfalls eine längsnutartige Erweiterung zur Aufnahme des den Rückleitungskanal bildenden Abschnitts aufweist.

Um weitgehende Spielfreiheit des Kugelumlauf-Schraubgetriebes zu erzielen, kann der Mutterkörper wenigstens zwei Profilringe enthalten, die axial gegeneinander vorgespannt sind und von denen der eine bei Belastung

- 4 -

in der einen und der andere bei Belastung in der anderen Axialrichtung trägt.

Die Profilringe sind als Massenartikel einfach und mit hoher Genauigkeit aus Metallblech herstellbar, wobei z.B. die von einer im Querschnitt rinnenartigen Profilstange abgelängten Teile auf einer Federbiegemaschine schraubenförmig gebogen und sodann mit dem Rückleitungskanal verbunden oder versehen werden. Durch entsprechende Wahl der Zahl der jeweils verwendeten Profilringe kann die Tragzahl des Kugelumlauf-Schraubgetriebes ohne weiteres den jeweiligen Bedingungen des Einsatzzweckes angepaßt werden.

Um ein Herausfallen der Kugeln aus den Schraubennuten beim Abschrauben eines Profilringes von der Spindel zu verhüten und um die Montage zu erleichtern, kann die Anordnung derart getroffen sein, daß neben dem Profilring in der Mutter ein längs des Schraubenganges verlaufendes biegsames Band angeordnet ist, das einen die Kugeln des Kugelumlaufkanales zumindest über die Länge der Schraubennut des Profilringes halterndes Teil aufweist. Dabei ist es zweckmäßig,wenn das Band aus Kunststoffmaterial besteht, das dann gleichzeitig eine Abdichtung des Schraubgetriebes gegen das Eindringen von Schmutz etc. bewirken kann.

Das Band weist mit Vorteil einen leistenartigen, an einem Halteteil angeformten lippenförmigen Halterungsteil für die Kugeln auf. Es kann mit seinem Halteteil in einer entsprechenden Nut wenigstens eines Profilringes oder eines diesen umschließenden Mutterkörpers ,gegebenenfalls formschlüssig

- 5 -

verankert sein. Weist das Kugelumlauf-Schraubgetriebe mehrere Profilringe auf, so ist es zweckmäßig,
wenn das Band zwischen zwei benachbarten Schraubengängen angeordnet und mit zwei die Kugeln der beiden
Schraubengänge haltenden Halterungsteilen ausgebildet ist.

In der Zeichnung sind Ausführungsbeispiele des Gegenstandes der Erfindung dargestellt. Es zeigen:

Fig. 1    ein Kugelumlauf-Schraubgetriebe gemäß der
          Erfindung mit im Axialschnitt dargestelltem Mutterkörper,in einer Seitenansicht
          und im Ausschnitt,

Fig. 2    das Kugelumlauf-Schraubgetriebe nach Fig. 1
          in einer Draufsicht,

Fig. 3    ein Kugelumlauf-Schraubgetriebe gemäß der
          Erfindung in einer zweiten Ausführungsform
          und in einer Draufsicht,

Fig. 4    das Kugelumlauf-Schraubgetriebe nach Fig. 3
          mit im Axialschnitt dargestelltem Mutterkörper,in einer Seitenansicht und im Ausschnitt,

Fig. 5    das Kugelumlauf-Schraubgetriebe nach Fig. 4
          in der Ausbildung mit drei Profilringen im
          axialen Schnitt in einer Seitenansicht, in
          einer Teildarstellung und in einem anderen
          Maßstab und

Fig. 6    ein Kugelumlauf-Schraubgetriebe gemäß der
          Erfindung in einer dritten Ausführungsform
          in einer Darstellung entsprechend Fig. 5.

- 6 -

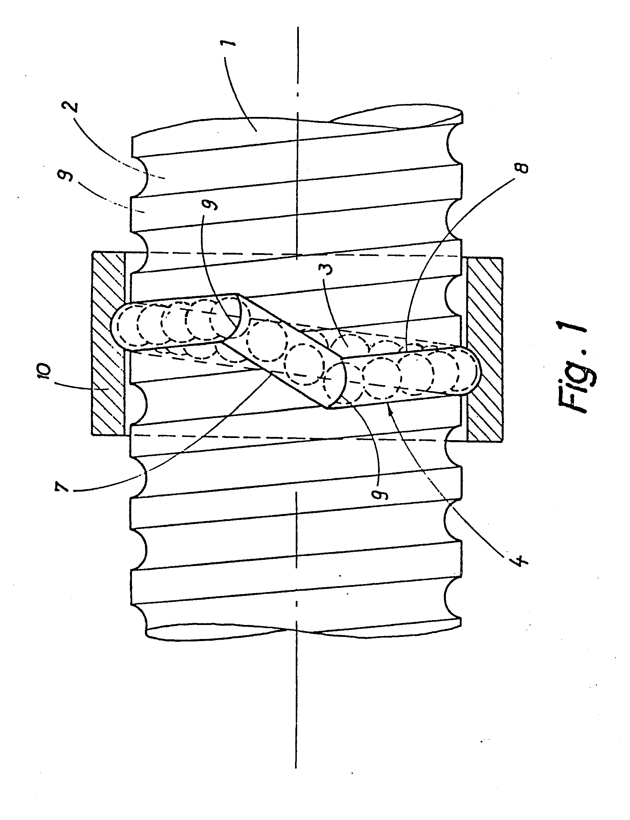

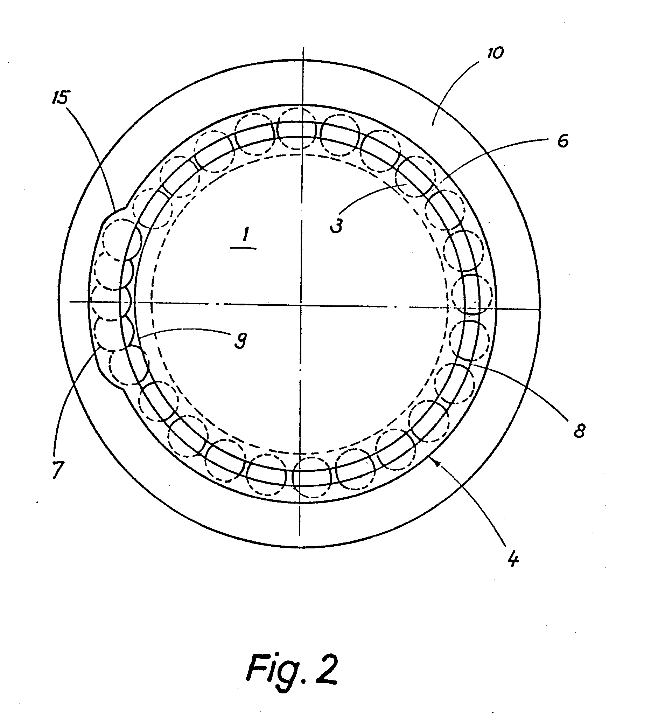

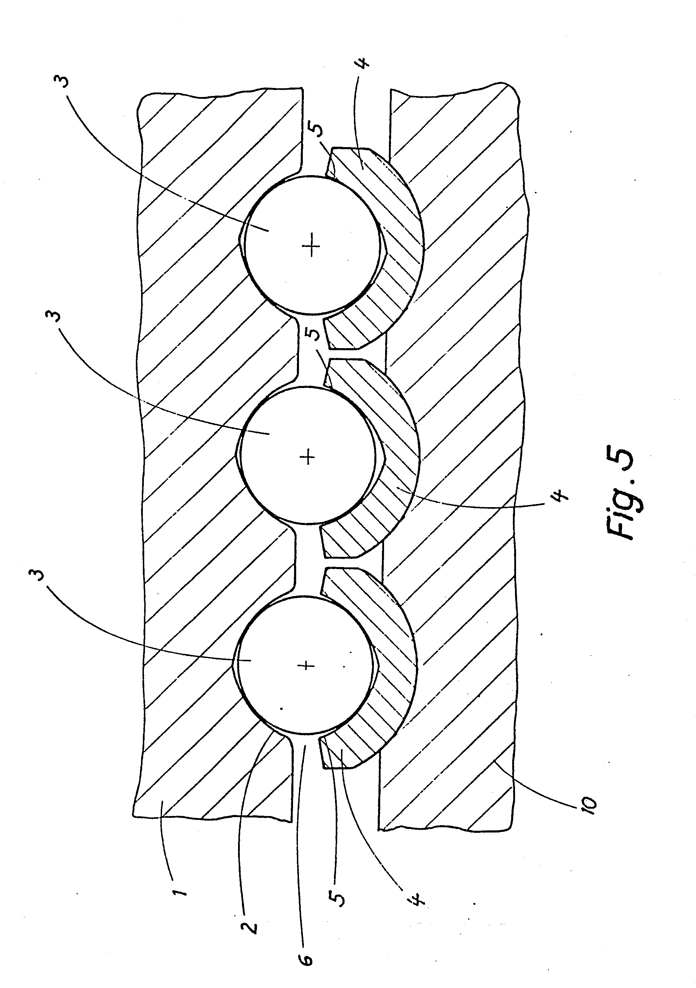

Das in den Fig. 1, 2 dargestellte Kugelumlauf-Schraubgetriebe weist eine zylindrische Spindel 1 auf, die an ihrem Umfang eine Schraubennut 2 von im Querschnitt im wesentlichen teilkreisförmiger und der Gestalt der Kugeln 3 angepaßter Profilform trägt. Auf die Spindel 1 ist ein geschlossener,einstückiger Profilring 4 aufgesetzt, der aus im Querschnitt rinnenförmigem Stahlblechmaterial besteht und dessen Querschnittsgestalt insbesondere aus Fig. 5 zu ersehen ist. Der Profilring 4 ist entsprechend der Schraubennut 2 der Spindel 1 verwunden und bildet auf seiner Innenseite eine im Querschnitt im wesentlichen teilkreisförmige Schraubennut 5 aus, die zusammen mit der Schraubennut 2 der Spindel 1 einen Kugelumlaufkanal 6 begrenzt, in dem die Kugeln 3 angeordnet sind. Der Profilring 4 erstreckt sich über den größten Teil eines Schraubenganges und ist mit einem quer verlaufenden Abschnitt 7 ausgebildet, der den Rückleitungskanal für die Kugeln 3 bildet. Der kurze Abschnitt 7 weist in der aus Fig. 2 ersichtlichen Weise einen größeren Durchmesser als der übrige einem Schraubengang der Schraubennut 2 der Spindel 1 folgende Teil 8 auf, so daß die Kugeln 3 in diesem Abschnitt 7 über die zwischen zwei benachbarten Schraubengängen der Spindel 1 liegende schraubenförmige Rippe 9 geleitet werden. Der den Rückleitungskanal bildende kurze Abschnitt 7 kann mit dem anderen Teil 8 des Profilringes 4 endseitig bei 9 verbunden, beispielsweise verschweißt sein, doch kann der ganze Profilring 4 auch einstückig, beispielsweise durch Stanzen und anschließendes Formen und Biegen hergestellt sein.

Der Profilring 4 ist in einen im wesentlichen hohlzylindrischen Mutterkörper 10 drehfest eingespritzt oder eingegossen. Der Mutterkörper 10 besteht beispielsweise aus Kunststoffmaterial oder einer metallischen Druckgußlegierung.

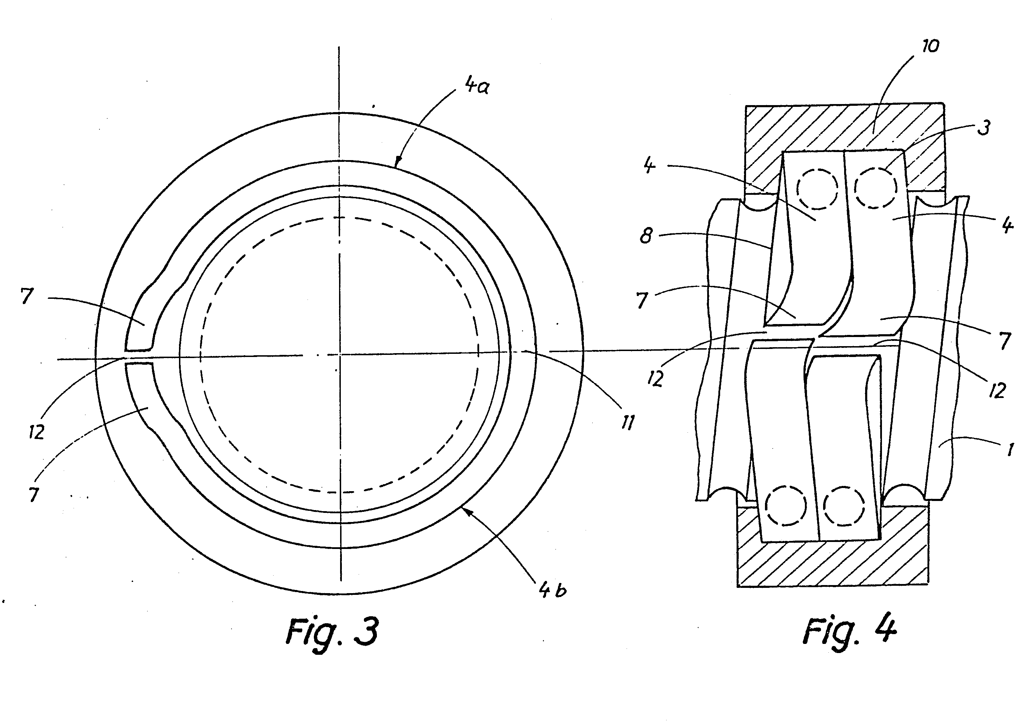

Bei der Ausführungsform nach den Fig. 3, 4 sind in dem Mutterkörper 10 zwei Profilringe 4 nebeneinanderliegend angeordnet, von denen jeder einen den Rückleitungskanal 7 bildenden kurzen Abschnitt 7 und einen dem Verlauf eines Schraubenganges der Schraubennut 2 der Spindel folgenden Teil 8 aufweist. Die beiden Profilringe 4 sind in der insbesondere aus Fig. 3 ersichtlichen Weise jeweils zweistückig hergestellt, wobei die beiden Profilringteile mit 4a und 4b bezeichnet sind. Die beiden Profilringteile 4a und 4b stoßen endseitig bei 11 stumpf aneinander; der Spalt 12 ist zur besseren Veranschaulichung in der Zeichnung übertrieben groß dargestellt. Die beiden Profilringe 4 sind in Achsrichtung der Spindel 1 gegeneinander vorgespannt, so daß bei der Belastung in der einen Axialrichtung der eine Profilring 4 und bei der Belastung in der anderen Axialrichtung der andere Profilring 4 trägt. Diese Vorspannung ist dadurch erzielt, daß die beiden aneinander anliegenden Profilringe 4 etwas gegeneinander verdreht und in dieser Stellung in dem Mutterkörper 10 fixiert sind, in den sie eingegossen oder eingespritzt sind.

Die beiden Profilringteile 4a, 4b sind aus einem Stahlblech in einem geeigneten Werkzeug durch Prägen und Biegen maßgetreu hergestellt. In Fig. 3 sind der besseren Übersichtlichkeit wegen die Kugeln 3 weggelassen, worauf der Ordnung halber hingewiesen sei.

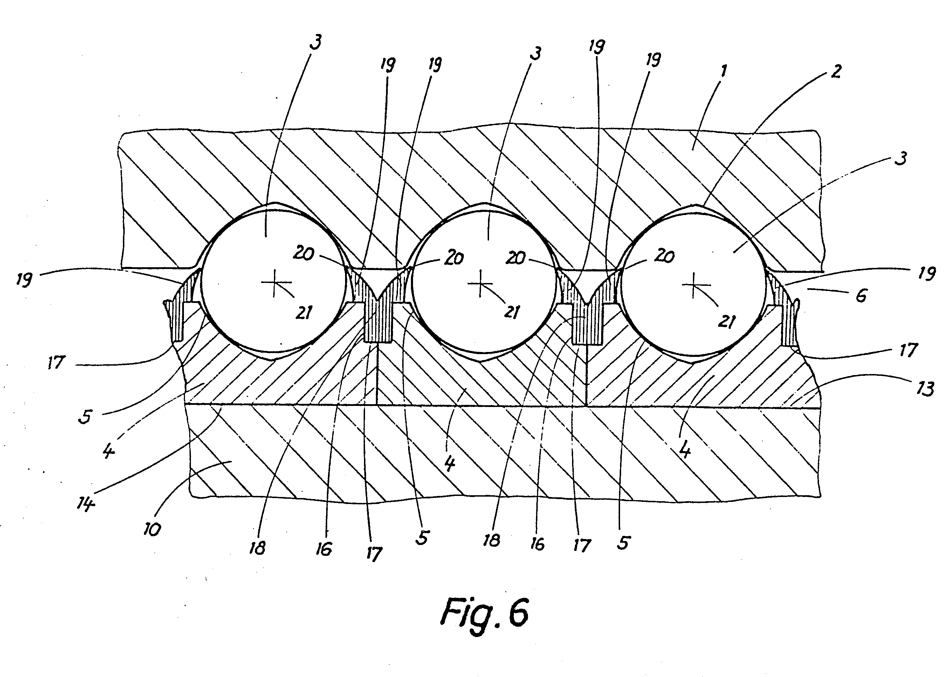

Die Zahl der in einen Mutterkörper 10 eingesetzten Profilringe 4 hängt von der zu erzielenden Tragzahl des Kugelumlauf-Schraubgetriebes ab. Bei den in den Fig. 5, 6 dargestellten Ausführungsformen sind drei Profilringe 4 vorgesehen, die entweder gemeinsam mit ihrem als Rückleitungskanal dienenden,quer verlaufenden,kurzen Abschnitt 7 einstückig oder entsprechend den Fig. 3, 4 mehrteilig sind. Bei der mehrteiligen Ausführung erübrigt sich in der Regel eine stirnseitige Verbindung der Profilringteile 4a, 4b, weil die Profilringteile in dem Mutterkörper 10 gehaltert und damit gegeneinander fixiert sind.

Bei der Ausführungsform nach Fig. 6 ist die Anordnung derart getroffen, daß die Außenumfangsflächen der drei unmittelbar nebeneinander angeordneten Profilringe 6 auf einer gemeinsamen Zylinderfläche 13 liegen, so daß sie in eine entsprechende zylindrische Durchgangsbohrung 14 des Mutterkörpers 10 - die gegebenenfalls eine längsnutartige Ausnehmung etwa der bei 15 in Fig. 2 dargestellten Art aufweist - eingeschoben werden können. Jeder der Profilringe 4 weist seitlich eine umlaufende Vertiefung 16 auf, derart, daß durch zwei benachbarte Profilringe 4 eine im Querschnitt etwa rechteckige, schraubenförmig verlaufende Nut 17 ausgebildet ist, die in einer nicht weiter dargestellten Ausführungsform auch im Querschnitt schwalbenschwanzförmig oder teilkreisförmig sein kann.

- 9 -

In die zwischen den drei Kugelreihen liegenden beiden Nuten 17 ist jeweils ein elastisches Kunststoffband mit einem stegartigen Halteteil 18 eingesetzt. Das Halteband weist zwei im Querschnitt etwa keilförmige, an das Halteteil 18 einstückig angeformte Halterungsteile 19 auf, die nach Art von Lippen ausgebildet sind und mit ihren spitzen Randkanten bei 20 an den benachbarten Kugeln 3 oberhalb deren Mittelpunkte 21 elastisch anliegen, derart, daß die Kugeln 3 in den zugeordneten Schraubennuten 5 der Profilringe 4 unverlierbar gehaltert sind, ohne daß ihre Beweglichkeit in der Kugelumlaufbahn 6 beeinträchtigt wäre. Die lippenartigen Halterungsteile 19 sind elastisch nachgiebig mit dem Ergebnis, daß die auf die Kugeln 3 übertragenen Reibungskräfte sehr gering sind.

Bei von der Spindel 1 abgeschraubten Profilringen 4 werden die Kugeln 4 durch die Halterungsteile 19 in den Profilringen 4 gehalten, wodurch die Montage des Kugelumlauf-Schraubgetriebes wesentlich vereinfacht und insbesondere verhindert wird, daß Kugeln 3 verloren gehen, wenn das Kugelumlauf-Schraubgetriebe auseinandergenommen wird.

Zusätzlich zu den in Fig. 6 dargestellten, zwischen den benachbarten Kugelreihen liegenden elastischen Bändern dienen die außenliegenden Halterungsteile 19 der dort vorgesehenen elastischen Bänder zur Abdichtung es Kugelumlaufkanales 6 nach außen hin gegen das Eindringen von Schmutz od.dgl. Die außenliegenden Bänder benötigen jeweils lediglich ein lippenförmiges Halterungsteil 19.

Abgesehen von den bereits erwähnten Möglichkeiten der Herstellung der Profilringe 4 können diese auch aus rinnenförmig vorgefertigtem Stangenmaterial dadurch hergestellt werden, daß entsprechende Stücke abgelängt und auf einer Federbiegemaschine gebogen und sodann an ihren Enden miteinander verbunden, beispielsweise verschweißt oder verlötet werden. Eine endseitige Verbindung kann auch entfallen, wenn ein Mutterkörper 10 vorgesehen ist, der die Profilringe 4 ohnehin radial zusammenhält. Schließlich sind auch noch Ausführungsformen denkbar, bei denen jeder Profilring 4 lediglich den einem Schraubengang der Schraubennut 2 der Spindel 1 folgenden Teil 8 aufweist und sich dann endseitig an einen in dem Mutterkörper 10 ausgebildeten Rückleitungskanal anschließt, der gegebenenfalls auch in einem Rückleitungskörper ausgebildet sein kann, welcher in eine Bohrung oder Ausnehmung des sonst keine eingearbeiteten Schraubennuten aufweisenden Mutterkörpers 10 eingesetzt ist.

-11-

Patentansprüche

1. Kugelumlauf-Schraubgetriebe, zwischen dessen Spindel und Mutter wenigstens ein durch entsprechende, im Querschnitt im wesentlichen teilkreisförmige Schraubennuten der Spindel und der Mutter begrenzter, schraubenförmig verlaufender Kugelumlaufkanal ausgebildet ist, in dem die Kugeln angeordnet sind, wobei die Mutter einen die Kugeln von einem Endabschnitt eines Schraubenganges des Kugelumlaufkanales zu dem anderen Endabschnitt dieses Schraubenganges leitenden Rückleitungskanal aufweist, dadurch gekennzeichnet, daß die Mutter wenigstens einen entsprechend einem Schraubengang des Kugelumlaufkanales (6) gekrümmten, im Querschnitt rinnenförmigen Profilring (4) aufweist, durch den eine Schraubennut (5) der Mutter gebildet ist und der mit einem quer verlaufenden, den Rückleitungskanal bildenden Abschnitt (7) versehen ist.

2. Kugelumlauf-Schraubgetriebe nach Anspruch 1, dadurch gekennzeichnet, daß der Rückleitungskanal durch einen quer verlaufenden kurzen Abschnitt (7) des Profilringes (4) gebildet ist.

- 12 -

3. Kugelumlauf-Schraubgetriebe nach Anspruch 1 oder 2, dadurch gekennzeichnet, daß der Profilring (4) als geschlossener Ring ausgebildet ist.

4. Kugelumlauf-Schraubgetriebe nach Anspruch 1 oder 2, dadurch gekennzeichnet, daß der Profilring (4) aus wenigstens zwei endseitig aneinander anschließend angeordneten, entsprechend gebogenen Profilringteilen (4a, 4b) besteht.

5. Kugelumlauf-Schraubgetriebe nach Anspruch 2 oder 3, dadurch gekennzeichnet, daß der Profilring (4) aus wenigstens einem entsprechend gestanzten Blechteil geformt ist.

6. Kugelumlauf-Schraubgetriebe nach einem der Ansprüche 2 bis 5, dadurch gekennzeichnet, daß der Profilring (4) aus wenigstens einem entsprechend abgelängten und gebogenen Profilblechteil besteht, dessen Enden gegebenenfalls miteinander verbunden sind.

7. Kugelumlauf-Schraubgetriebe nach einem der vorhergehenden Ansprüche, dadurch gekennzeichnet, daß wenigstens ein Profilring (4) in einen eine entsprechende Durchgangsbohrung aufweisenden Mutterkörper (10) eingesetzt und in diesem unverdrehbar gehaltert ist.

8. Kugelumlauf-Schraubgetriebe nach Anspruch 7, dadurch gekennzeichnet, daß der Profilring (4) in den Mutterkörper (10) eingegossen oder eingespritzt ist.

9. Kugelumlauf-Schraubgetriebe nach Anspruch 8, dadurch gekennzeichnet, daß der Mutterkörper (10) aus einem Kunststoffmaterial besteht.

10. Kugelumlauf-Schraubgetriebe nach einem der Ansprüche 7 bis 9, dadurch gekennzeichnet, daß der Profilring (7) zumindest in den dem Rückleitkanal benachbarten Bereichen (8) eine auf einer koaxialen Kreiszylinderfläche liegende Außenumfangsfläche (13) aufweist und in eine zylindrische Bohrung (14) des Mutterkörpers (10) eingesetzt ist, die gegebenenfalls eine längsnutartige Erweiterung (15) zur Aufnahme des den Rückleitungskanal bildenden Abschnitts (7) aufweist.

11. Kugelumlauf-Schraubgetriebe nach einem der Ansprüche 7 bis 10, dadurch gekennzeichnet, daß der Mutterkörper (10) wenigstens zwei Profilringe (4) enthält, die axial gegeneinander vorgespannt sind.

12. Kugelumlauf-Schraubgetriebe nach einem der vorhergehenden Ansprüche, dadurch gekennzeichnet, daß neben dem Profilring (4) in der Mutter ein längs des Schraubenganges verlaufendes biegsames Band angeordnet ist, das einen die Kugeln (3) des Kugelumlaufkanales (6) zumindest über die Länge der Schraubennut (5) des Profilringes (4) haltendes Teil (19) aufweist.

13. Kugelumlauf-Schraubgetriebe nach Anspruch 12, dadurch gekennzeichnet, daß das Band aus Kunststoffmaterial besteht.

- 14 -

14. Kugelumlauf-Schraubgetriebe nach Anspruch 12 oder 13, dadurch gekennzeichnet, daß das Band einen leistenartigen, an einem Halteteil (18) angeformten lippenförmigen Halterungsteil (19) für die Kugeln (3) aufweist.

15. Kugelumlauf-Schraubgetriebe nach Anspruch 14, dadurch gekennzeichnet, daß das Band mit seinem Halteteil (18) in einer entsprechenden Nut (17) wenigstens eines Profilringes (4) oder eines diesen umschließenden Mutterkörpers (10), gegebenenfalls formschlüssig, verankert ist.

16. Kugelumlauf-Schraubgetriebe nach einem der Ansprüche 7 bis 11 sowie nach einem der Ansprüche 12 bis 15, dadurch gekennzeichnet, daß das Band zwischen zwei benachbarten Schraubengängen angeordnet und mit zwei die Kugeln (3) der beiden Schraubengänge haltenden Halterungsteilen (19) ausgebildet ist.

Fig. 1

*Fig. 2*

Fig. 4

Fig. 3

Fig. 5

0132492

Fig. 6

Europäisches
Patentamt

**EUROPÄISCHER RECHERCHENBERICHT**

**0132492**
Nummer der Anmeldung

EP 84 10 1707

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 198 029  (H. ORNER) <br><br> * Ganzes Dokument * | 1,3,7, 11 | F 16 H 25/22 |
| A | DE-U-8 236 312  (SKF KUGELLAGERFABRIKEN) <br> * Ganzes Dokument * | 1,12-15 | |
| A | GB-A-1 051 363  (THE MARCONI COMPANY) <br> * Seite 2, Zeilen 45-59; Anspruch 1; Figur 2 * | 1-3,7 | |
| A | DE-A-2 732 896  (ROLTRA) <br> * Ansprüche 4, 5; Figur 2 * | 5,7,9 | |
| A | US-A-3 009 367  (L.G. STRIGGOW) <br><br> ----- | | |

|  | RECHERCHIERTE SACHGEBIETE (Int. Cl. ³) |
|---|---|
| | F 16 H 25/00 |

Der vorliegende Recherchenbericht wurde für alle Patentansprüche erstellt.

| Recherchenort <br> BERLIN | Abschlußdatum der Recherche <br> 26-09-1984 | Prüfer <br> LEMBLE Y.A.F.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82